# EUROPÄISCHE PATENTSCHRIFT

(11) **EP 4 103 385 B1**
(45) Veröffentlichungstag und Bekanntmachung des Hinweises auf die Patenterteilung: **31.07.2024**
(21) Anmeldenummer: 21705446.9
(22) Anmeldetag: 09.02.2021
(51) Int. Cl.: B29C 45/17, B29C 45/16

(54) **SPRITZEINHEIT FÜR DAS MEHRKOMPONENTEN-SPRITZGIESSEN**
INJECTION UNIT FOR MULTI-COMPONENT INJECTION MOULDING
UNITÉ DE PULVÉRISATION UTILISÉE POUR LE MOULAGE PAR INJECTION MULTI-COMPOSANTS

(30) Priorität: 12.02.2020 DE 102020103659
(43) Veröffentlichungstag der Anmeldung: 21.12.2022
(73) Patentinhaber: KraussMaffei Technologies GmbH, 85599 Parsdorf (DE)
(72) Erfinder: KLAUS, Stefan, 85247 Schwabhausen (DE); HOBMEIER, Stephan, 80999 München (DE); KLEPSCH, Simon, 94227 Zwiesel (DE); SCHNEIDER, Udo, 81249 München (DE)
(74) Vertreter: Wilhelm, Ludwig
(86) Internationale Anmeldenummer: PCT/EP2021/053097
(87) Internationale Veröffentlichungsnummer: WO 2021/160615

(56) Entgegenhaltungen:
- DE-A1- 2 445 786
- DE-U1- 202010 002 747
- JP-A- 2003 225 922
- JP-A- 2013 094 990

## Beschreibung

Die Erfindung betrifft eine Spritzeinheit für das Mehrkomponenten-Spritzgießen mit einer Kunststoff-Spritzgießmaschine, wobei die Spritzeinheit zwei Plastifiziereinheiten umfasst, die relativ zueinander übereinander angeordnet sind.

Aus dem Stand der Technik ist es bekannt, für das Mehrkomponenten-Spritzgießen eine Spritzeinheit mit mehreren Plastifiziereinheiten vorzusehen, um die jeweils benötigte Komponente an Schmelze aufzubereiten und in ein Formwerkzeug einzuspritzen, wobei für diese mehreren Plastifiziereinheiten verschiedene Anordnungen untereinander und in Bezug auf das Formwerkzeug möglich sind (Dr.-Ing. Friedrich Johannaber, Kunststoff-Maschinenführer, 4.Ausgabe, 2004, Seite 236, Bild 164). Bei einer dieser bekannten Anordnungen ist eine erste untere Plastifiziereinheit vorgesehen, die einem zentralen, in der Mitte des Formwerkzeugs angeordneten Anspritzpunkt zugeordnet ist. Schräg darüber ist eine zweite obere Plastifiziereinheit angeordnet, die einem Anspritzpunkt zugeordnet ist, welcher sich oberhalb des vorgenannten mittig liegenden Anspritzpunkts befindet.

Bei Spritzeinheiten dieser Art ist es bekannt, die obere Plastifiziereinheit relativ zu der unteren durch einen Linearantrieb in Maschinenlängsrichtung zu verfahren (DE4229254A1, DE202010002747U1).

Aus der DE 24 45 786 A1 ist eine Spritzeinheit für das Mehrkomponenten Spritzgießen bekannt, wobei die Spritzeinheit zwei Plastifiziereinheiten umfasst, die relativ zueinander übereinander auf einem Gestell angeordnet sind.

Unabhängig von dem vorgenannten Aspekt des Verfahrens der oberen Plastifiziereinheit relativ zu der unteren Plastifiziereinheit kann es erforderlich werden, dass das Plastifizierungsteil der unteren Plastifiziereinheit gegen ein anderes Plastifizierungsteil ausgetauscht werden muss. Das kann beispielsweise dann der Fall sein, wenn ein schwerer Defekt an dem Plastifizierungsteil der unteren Plastifiziereinheit einen Austausch erforderlich macht. Ferner kann ein Austausch des Plastifizierungsteils erforderlich sein, falls andere Materialien oder Farben verarbeitet werden sollen. Auch kann es bei aggressiven Materialien zu einem hohen Verschleiß und damit Ausfall der Plastifiziereinheit kommen, was ebenfalls einen Austausch zur Folge hat.

Bekannt ist, dass für einen solchen Austausch nahezu sämtliche Verbindungen zwischen der oberen Plastifiziereinheit und der unteren Plastifiziereinheit gelöst werden müssen und die obere Plastifiziereinheit mittels eines Krans nach oben von der unteren Plastifiziereinheit abgehoben und hinter der unteren Plastifiziereinheit oder an einem anderen Ort auf einem Gestell abgelegt wird. Damit ist die untere Plastifiziereinheit frei zugänglich. Nach dem Austausch der unteren Plastifiziereinheit wird die obere mittels des Krans von dem Gestell abgehoben, über die untere Plastifiziereinheit verfahren und wieder mit dieser verbunden. Nachteilig hieran ist der damit verbundene vergleichsweise hohe Zeitaufwand. Das Vorstehende gilt sinngemäß, wenn lediglich das Plastifizierungsteil der unteren Plastifiziereinheit ausgetauscht werden muss. In diesem Falle würde es genügen, von der oberen Plastifiziereinheit lediglich das Plastifizierungsteil abzubauen und an einem anderen Ort abzulegen.

Ausgehend hiervon liegt der Erfindung die Aufgabe zugrunde, eine Spritzeinheit anzugeben, mit welcher eine deutliche Erleichterung und eine Zeitersparnis beim Austausch des Plastifizierungsteils der unteren Plastifiziereinheit erreicht werden kann. Die Lösung dieser Aufgabe erfolgt durch eine Spritzeinheit mit den Merkmalen von Anspruch 1. Vorteilhafte Ausgestaltungen und Weiterentwicklungen finden sich in den Unteransprüchen.

Die Idee geht von dem Grundgedanken aus, die obere Plastifiziereinheit um eine geeignet angeordnete Achse zu schwenken und dadurch Raum für einen freien Zugang zu der unteren Plastifiziereinheit zu schaffen. Ein freier Zugang ist insbesondere dann gegeben, wenn zudem das Plastifizierungsteil der oberen Plastifiziereinheit entfernt worden ist.

Demgemäß ist gemäß Anspruch 1 vorgesehen, dass die obere Plastifiziereinheit gegenüber der unteren Plastifiziereinheit um eine horizontale Drehachse zwischen mindestens zwei Positionen schwenkbar ist, nämlich einer ersten Position als Betriebsposition, in welcher die beiden Plastifiziereinheiten in Verbindung mit einem Formwerkzeug bringbar sind, und einer zweiten Position als Wartungsposition, in welcher die obere Plastifiziereinheit gegenüber der Betriebsposition nach oben aus der Betriebsposition heraus geschwenkt ist. Vorliegend bedeutet "Betriebsposition", dass sich die Spritzeinheit - und somit auch die beiden Plastifiziereinheiten - auf einer Position entlang der Maschinenlängsachse befinden, in welcher die Spritzeinheit einen geeignet großen Abstand zu derjenigen Werkzeugaufspannplatte aufweist, welche der Spritzeinheit am nächsten liegt. Der Abstand ist derart bemessen, dass die obere Plastifiziereinheit frei beweglich zwischen den beiden vorgenannten Positionen geschwenkt werden kann. Zudem sollte der Abstand so bemessen sein, dass ein guter Zugang zu der unteren Plastifiziereinheit gewährleistet ist. In dieser Position sind die beiden Plastifiziereinheiten in Verbindung mit einem Formwerkzeug bringbar, insbesondere mit derjenigen Formwerkzeughälfte, welche sich auf der der Spritzeinheit zugeordneten Werkzeugaufspannplatte befindet. Diese Werkzeugaufspannplatte wird auch Düsenplatte genannt. In der Regel handelt es sich um die feststehende Werkzeugaufspannplatte. Erfindungsgemäß erfolgt die Verbindung mit dem Formwerkzeug durch ein Verfahren der beiden Plastifiziereinheiten aus der Betriebsposition heraus auf das Formwerkzeug zu und durch das Andocken oder Anpressen der Düsen der beiden Plastifiziereinheiten an das Formwerkzeug. Die Wartungsposition sollte soweit von der Betriebsposition beabstandet sein, dass ein guter Zugang zu der unteren Plastifiziereinheit gewährleistet ist, insbesondere zu dem Plastifizierungsteil der unteren Plastifiziereinheit.

Dabei kann vorgesehen werden, dass die obere Plastifiziereinheit aus der Betriebsposition heraus um einen vorgebbaren Schwenkwinkel α gegenüber der Betriebsposition geschwenkt werden kann. Ein vorgebbarer Bezugspunkt auf der Längsachse der oberen Plastifiziereinheit kann somit einen vorgebbaren vertikalen Abstand zur Längsachse der unteren Plastifiziereinheit aufweisen. Auf diese Weise kann vorgegeben werden, wie weit die Wartungsposition von der Betriebsposition beabstandet sein soll.

Gemäß einer vorteilhaften Ausgestaltung der Erfindung kann ein Tragrahmen vorgesehen sein, der sich zumindest abschnittsweise über der unteren Plastifiziereinheit erstreckt. Der Tragrahmen kann von der unteren Plastifiziereinheit bestandet oder lösbar mit dieser verbunden sein. Dieser Tragrahmen dient der einfachen Aufnahme und Anordnung der oberen Plastifiziereinheit in der erfindungsgemäßen Spritzeinheit. Die obere Plastifiziereinheit ist auf dem Tragrahmen vorzugweise lösbar befestigt und auf diesem abgestützt.

Gemäß einer ersten Ausführungsform der Erfindung kann der Tragrahmen um eine horizontale Drehachse schwenkbar mit dem Gestell der Spritzeinheit verbunden sein, wobei die Lage der horizontalen Drehachse derart gewählt ist, dass die obere Plastifiziereinheit zusammen mit dem Tragrahmen zwischen der Betriebsposition und der Wartungsposition schenkbar ist.

Gemäß einer zweiten Ausführungsform der Erfindung kann die obere Plastifiziereinheit derart gelenkig mit dem Tragrahmen verbunden sein, dass diese Verbindung eine horizontale Drehachse bildet, um welche die obere Plastifizereinheit gegenüber der unteren Plastifiziereinheit zwischen der Betriebsposition und der Wartungsposition schwenkbar ist. Hierzu können vorzugsweise an dem Tragrahmen ein vorderes Tragelement und ein hinteres Tragelement vorgesehen sein, auf denen das Gewicht der oberen Plastifiziereinheit abgestützt ist. Die obere Plastifiziereinheit ist gelenkig mit dem hinteren Tragelement verbunden und lösbar an dem vorderen Tragelement befestigt. Auf diese Weise kann die obere Plastifiziereinheit auf einfache Art und Weise aus der Betriebsposition in die Wartungsposition geschwenkt werden, ohne dass der Tragrahmen mitbewegt werden muss. Bei dieser Ausführungsform ist darauf zu achten, dass der Tragrahmen in geeigneter Weise gestaltet ist, so dass die untere Plastifiziereinheit auch bei vorhandenem Tragrahmen noch gut zugänglich ist, um einen Austausch einfach durchführen zu können.

Bei der erfindungsgemäßen Spritzeinheit sollte zudem ein Stützelement vorgesehen sein, mit welchem die obere Plastifiziereinheit in der Wartungsposition gehalten werden kann. Gemäß einer bevorzugten Ausführungsform kann das Stützelement um eine horizontale Stützelement-Drehachse drehbar sein und in mindestens zwei Stellungen gebracht werden, nämlich in eine eingeklappte Stellung als Ruhestellung, welche vorliegt, wenn sich die obere Plastifiziereinheit in der Betriebsposition befindet, und in eine ausgeklappte Stellung als Stützstellung, welche vorliegt, wenn sich die obere Plastifiziereinheit in der Wartungsposition befindet. Vorzugsweise ist das Stützelement in der eingeklappten und/oder in der ausgeklappten Stellung verriegelbar.

Ein Stützelement kann an dem Tragrahmen angebracht und diesem gegenüber um eine horizontale Stützelement-Drehachse drehbar sein. Die Lage der Stützelement-Achse an dem Tragrahmen hängt von der konstruktiven Ausgestaltung der oberen Spritzeieinheit und - in geringerem Maße - von der konstruktiven Ausgestaltung des Tragrahmens ab. Es kommt lediglich darauf an, dass das Gewicht aus oberer Plastifiziereinheit und Tragrahmen, welches sich in Förderrichtung der Schmelze gesehen förderabseitig von der Drehachse des Tragrahmens befindet, sicher von dem Stützelement aufgenommen und in das Gestell abgeleitet werden kann.

Alternativ oder in Ergänzung dazu kann ein Stützelement an der oberen Plastifiziereinheit angebracht und dieser gegenüber um eine horizontale Stützelement-Drehachse drehbar sein. Die Lage der Stützelement-Achse hängt von der konstruktiven Ausgestaltung der oberen Spritzeieinheit ab. Es kommt darauf an, dass das Gewicht der oberen Plastifiziereinheit, welches sich in Förderrichtung der Schmelze gesehen förderabseitig von der Drehachse der oberen Plastifiziereinheit befindet, sicher von dem Stützelement aufgenommen und in das Gestell abgeleitet werden kann.

Vorteilhafterweise sollte ein Stützelement vorgesehen sein, welches derart ausgebildet und angeordnet ist, dass in der ausgeklappten Stellung des Stützelements der vor der Drehachse für das Schwenken der oberen Plastifiziereinheit befindliche Abschnitt dieser Plastifiziereinheit über das Stützelement auf dem Gestell und/oder der unteren Plastifiziereinheit abgestützt ist und die obere Plastifiziereinheit sicher in der Wartungsposition gehalten werden kann.

Nachfolgend soll die Erfindung anhand von Ausführungsbeispielen und unter Bezugnahme auf die Figuren 1 bis 4 näher erläutert werden.
- Figur 1: Spritzeinheit mit oberer und unterer Plastifiziereinheit in Betriebsposition;
- Figur 2: Erste Ausführungsform der Erfindung mit oberer Plasitifiziereinheit in Wartungsposition;
- Figur 3: Zweite Ausführungsform der Erfindung mit oberer Plastifiziereinheit in Wartungsposition;
- Figur 4: Zweite Ausführungsform gemäß Figur 3 mit abgebautem Plastifizierungsteil.

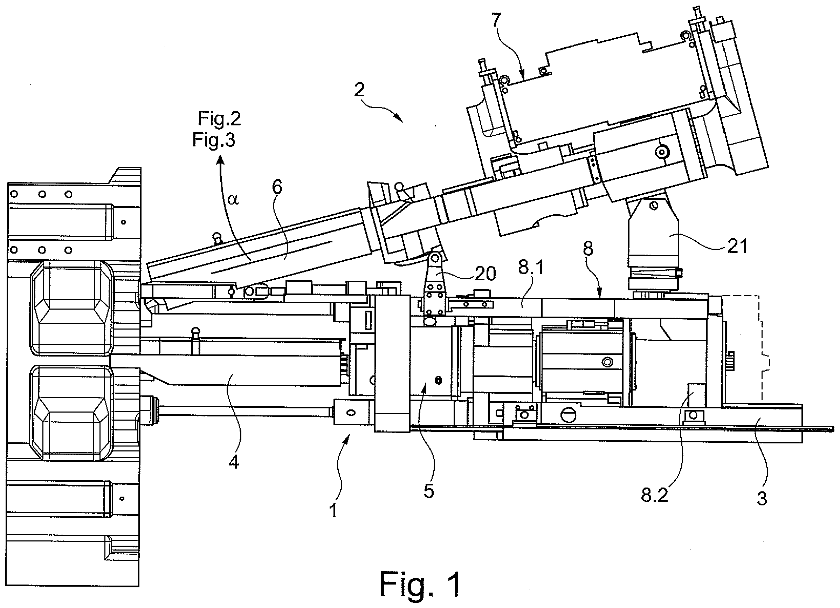

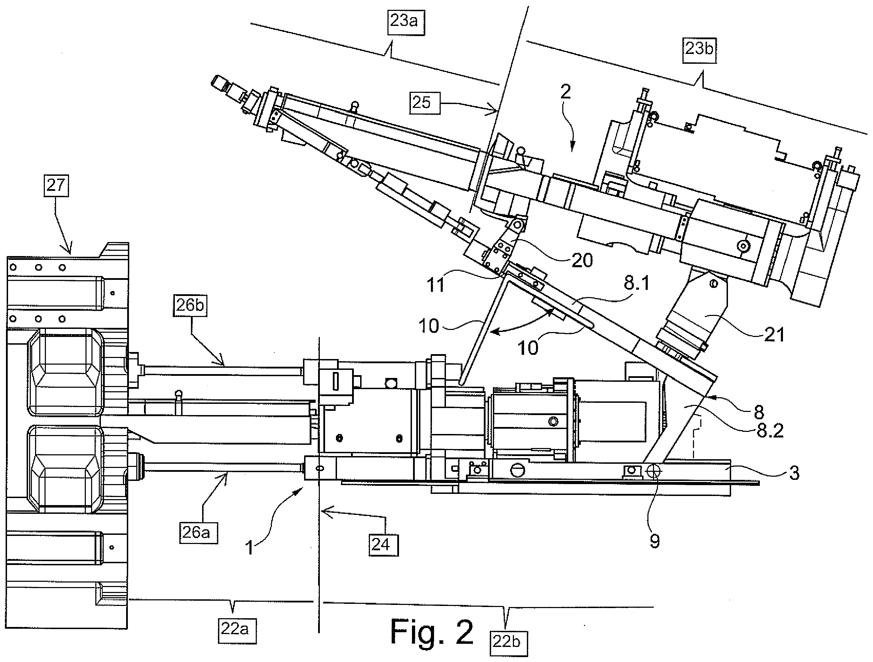

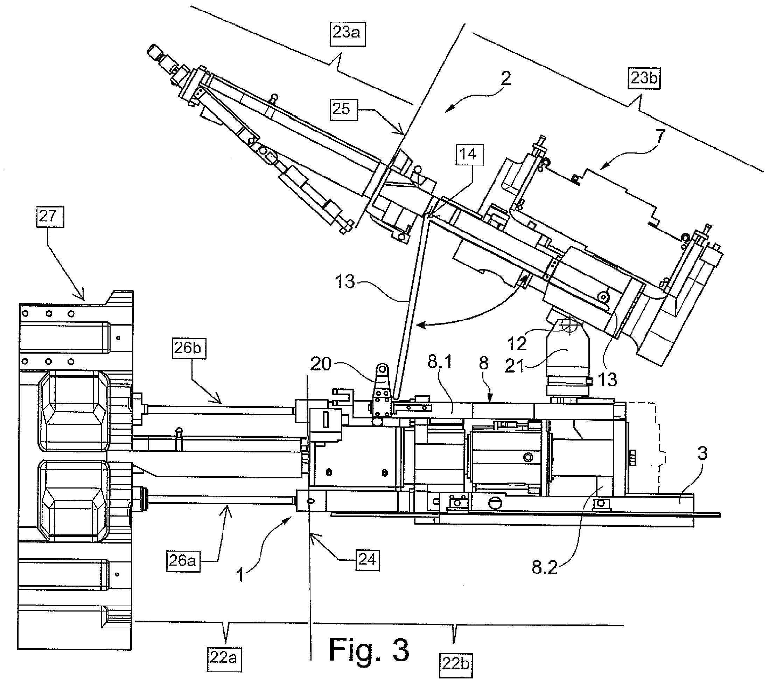

Gemäß der Figur 1 sind eine erste, untere Plastifiziereinheit 1 sowie eine zweite, obere Plastifiziereinheit 2 vorgesehen, die zusammen auf einem Gestell 3 abgestützt sind und in Maschinenlängsrichtung gesehen nach vorne und nach hinten verfahren werden können. Die untere Plastifiziereinheit 1 kann mittels Linearantrieben 26a und 26b in Maschinenlängsrichtung verfahren werden (siehe Figuren 2 und 3). Dabei kann die obere Plastifiziereinheit 2 durch eine geeignete Lagerung oder Verbindung mit der unteren Plastifiziereinheit 1 zusammen mit dieser verfahren werden. Zusätzlich kann vorgesehen sein, dass die obere Plastifiziereinheit 2 relativ zu der unteren durch einen geeigneten Linearantrieb in Maschinenlängsrichtung verfahren werden kann. Die beiden Plastifiziereinheiten 1 und 2 sind so übereinander angeordnet, dass die Längsachsen dieser beiden Plastifiziereinheiten in einer vertikalen Ebene liegen. Jede dieser Plastifiziereinheiten umfasst ein Plastifizierungsteil 22a, 23a und ein Antriebsteil 22b, 23b, welche jeweils an einer geeigneten Schnittstelle 24, 25 lösbar miteinander verbunden sind (siehe Figuren 2 und 3). Das jeweilige Antriebsteil 22b, 23b umfasst im Wesentlichen die eigentliche Antriebseinheit 5, 7 mit jeweils einem Dreh- und Linearantrieb zum Betätigen einer Schnecke. Die untere Plastifiziereinheit 1 verfügt über einen Zylinder (hier unter einer Abdeckung 4), in dem eine Schnecke mittels einer ersten Antriebseinheit 5 dreh- und linearantreibar angeordnet ist. Schnecke und Zylinder der unteren Plastifiziereinheit 1 bilden einen wesentlichen Bestandteil des Plastifizierungsteils 22a der unteren Plastifiziereinheit 1. Die zweite, obere, Plastifiziereinheit 2 verfügt ebenfalls über einen Zylinder (hier unter einer Abdeckung 6), eine darin dreh- und linearantreibar angeordnete Schnecke und eine Antriebseinheit 7. Schnecke und Zylinder der oberen Plastifiziereinheit 2 bilden einen wesentlichen Bestandteil des Plastifizierungsteils 23a der oberen Plastifiziereinheit 2. Dabei ist die obere Plastifiziereinheit 2 über eine vorderes Tragelement 20 und ein hinteres Tragelement 21 derart auf einem Tragrahmen 8 abgestützt, dass sie gegenüber der Horizontalen geneigt angeordnet ist und somit eine schräge Stellung aufweist. Die Tragelemente 20 und 21 sind auf Linearführungen so mit dem Tragrahmen 8 verbunden, dass sie in Maschinenlängsrichtung verfahren werden können. Der Tragrahmen 8 ist in Seitenansicht im Wesentlichen L-förmig ausgebildet. Auf dem horizontalen Teil 8.1 des Tragrahmens 8 bzw. dem horizontalen Schenkel 8.1 des L ist die obere Spritzeinheit 2 mittels der Tragelementen 20 und 21 abgestützt und befestigt. Dieser horizontale Teil 8.1 des Tragrahmens 8 ist in geeigneter Weise mit der unteren Plastifiziereinheit 1 oder dem Gestell 3 verbunden. Der vertikale Teil 8.2 des Tragrahmens 8 bzw. der vertikale Schenkel 8.2 des L endet auf dem Gestell 3 der unteren Spritzeinheit 1 und ist dort mit diesem Gestell 3 verbunden.

Die Figur 1 zeigt eine Situation, in welcher sich die beiden Plastifiziereinheiten 1 und 2 in der Betriebsposition befinden und in welcher die beiden Plastifiziereinheiten in Verbindung mit einem Formwerkzeug bringbar sind. Je nach konstruktiver Ausgestaltung der Düsenplatte 27 kann die Spritzeinheit auch einen größeren Abstand zu der Düsenplatte 27 einnehmen oder einnehmen müssen, als dies der Darstellung in der Figur 1 entspricht. Der Abstand ist jedenfalls derart zu bemessen, dass die obere Plastifiziereinheit 2 frei beweglich nach oben geschwenkt und eine Position wie in den Figuren 2 und 3 eingenommen werden kann. Gemäß der Erfindung kann die obere Plastifiziereinheit aus der Betriebsposition um einen Schwenkwinkel α in eine Wartungsposition geschwenkt werden, welche in den Figuren 2 und 3 dargestellt ist. Dies soll in der Figur 1 durch den Pfeil mit dem Bezugszeichen α angedeutet werden. An der Pfeilspitze ist der Verweis auf die Wartungspositionen in den Figuren 2 und 3 angegeben. An der Schnittstelle 24 der unteren Plastifiziereinheit 1 können das untere Plastifizierungsteil 22a und das untere Antriebsteil 22b voneinander getrennt und wieder zusammengebaut werden. An der Schnittstelle 25 der oberen Plastifiziereinheit 2 können das obere Plastifizierungsteil 23a und das obere Antriebsteil 23b voneinander getrennt und wieder zusammengebaut werden. Hierzu sind an den Schnittstellen 24 und 25 geeignete lösbare Verbindungen zwischen dem jeweiligen Plastifizierungsteil und dem jeweiligen Antriebsteil vorgesehen. Je nach auszuführenden Arbeiten an der Plastifiziereinheit können beide Plastifizierungsteile 22a und 23a oder nur ein einzelnes Plastifizierungsteil 22a, 23a abgebaut werden.

Gemäß einer ersten Variante (siehe Figur 2) ist der Tragrahmen 8 als Ganzes und mit ihm die obere Plastifiziereinheit 2 um eine Achse 9 drehbar mit dem Gestell 3 verbunden, um die obere Plastifiziereinheit aus der Betriebsposition (Figur 1) in eine Wartungsposition (Figur 2) zu schwenken. Die Achse 9 in dem Gestell 3 liegt orthogonal zur Maschinenlängsachse. Der horizontale Teil 8.1 des Tragrahmens 8 ist in geeigneter Weise lösbar mit der unteren Plastifiziereinheit 1 oder dem Gestell 3 verbunden. Damit kann - wenn die Verbindung des horizontalen Teils 8.1. gelöst ist - die obere Plastifiziereinheit 2 zusammen mit dem Tragrahmen 8 um die Achse 9 gedreht und in die in der Figur 2 gezeigte Wartungsposition gebracht werden. Ein Stützelement 10 erster Art ist um eine Achse 11 drehbar an dem Tragrahmen 8 befestigt. Das Stützelement 10 kann aus einer eingeklappten Stellung (in der Figur 2 parallel zu dem horizontalen Teil 8.1. des Tragrahmens 8) in eine ausgeklappte Stellung gebracht werden, wo es in geeigneter Weise mit dem Gestell 3 der unteren Plastifiziereinheit 1 verriegelt werden kann. Die Position der Drehachsen 11 und 9 einerseits sowie die Position der Verriegelung des Stützelements 10 mit dem Gestell 3 andererseits sind derart gewählt, dass das Gewicht aus oberer Plastifiziereinheit 1 und Tragrahmen 8, welches sich links von der Drehachse 9 befindet, sicher abgestützt ist.

Gemäß einer zweiten Variante (siehe Figur 3) wird nur die obere Plastifiziereinheit 2 aus der Betriebsposition in die in der Figur 3 dargestellte Wartungsposition geschwenkt. Daher kann Tragrahmen 8 fest oder lösbar mit dem Gestell 3 verbunden sein. Die Drehachse zum Schwenken der oberen Plastifiziereinheit 2 ist in dem hinteren Tragelement 21 vorgesehen. Die obere Plastifiziereinheit 2 ist dort gelenkig mit dem Tragelement 21 verbunden und somit auch gelenkig gegenüber dem Tragrahmen 8 gelagert. Demzufolge ist eine Drehachse 12 vorgesehen, um die obere Plastifiziereinheit 2 von der unteren Plastifiziereinheit 1 weg aus der Betriebsposition (Figur 1) zu schwenken und in die in der Figur 3 gezeigte Wartungsposition zu bringen. Ein Stützelement 13 zweiter Art ist um eine Achse 14 drehbar an der oberen Plastifiziereinheit 2 befestigt. Das Stützelement 13 kann aus einer eingeklappten Stellung (in der Figur 3 parallel zur Längsachse der oberen Plastifiziereinheit 2) in eine ausgeklappte Stellung gebracht werden, wo es in geeigneter Weise mit dem Tragrahmen 8 oder dem Gestell 3 der unteren Spritzeinheit 1 verriegelt werden kann. Die Position der Drehachsen 14 und 12 einerseits sowie die Position der Verriegelung des Stützelements 13 mit dem Tragrahmen 8 oder dem Gestell 3 andererseits sind derart gewählt, dass das Gewicht der oberen Plastifiziereinheit 2, welches sich links von der Drehachse 12 befindet, sicher abgestützt ist.

Bei einem Wechsel des unteren Plastifizierungsteils 22a empfiehlt sich folgende Vorgehensweise. Die Spritzeinheit wird als Ganzes von dem Formwerkzeug bzw. der Düsenplatte 27 wegbewegt, bis ein geeignet großer Abstand zur Düsenplatte 27 vorliegt. Damit ist die vorliegend als Betriebsposition bezeichnete Position auf der Maschinenlängsachse eingenommen. Das obere Plastifizierungsteil 23a wird nun mit einer geeigneten Haltevorrichtung in seiner Position gehalten, beispielsweise mittels Riemen, die an einem Kran befestigt sind. In einem nächsten Schritt wird die Verbindung zwischen dem oberen Plastifizierungsteil 23a und dem oberen Antriebsteil 23b an der Schnittstelle 25 gelöst. Mittels der Haltevorrichtung kann das obere Plastifizierungsteil 23a von dem oberen Antriebsteil 23b wegbewegt und in eine Parkposition gebracht werden. Auf diese Weise ist der Raum vor dem oberen Antriebsteil 23b frei.

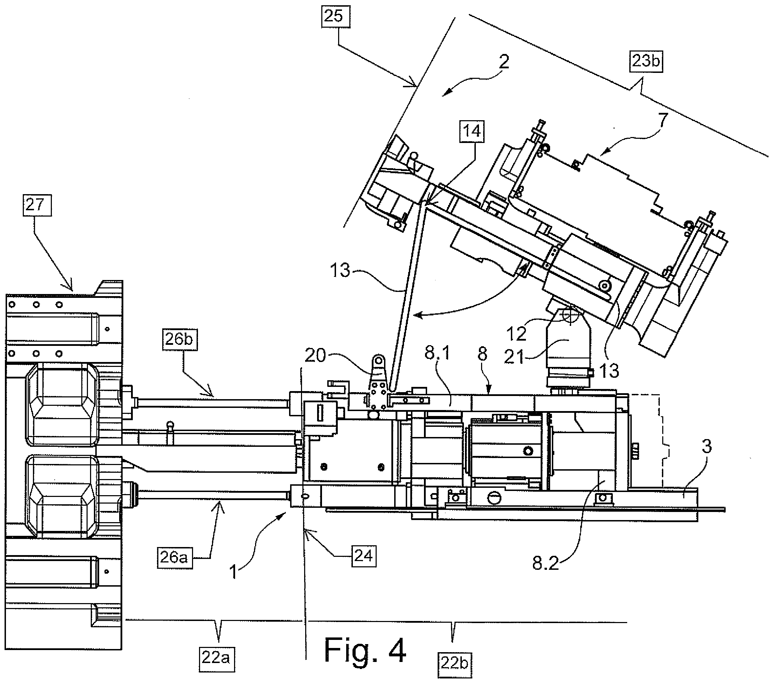

In einem nächsten Schritt kann das Antriebsteil 23b der oberen Plastifiziereinheit 2 gemäß einer der Varianten aus den Figuren 2 und 3 nach oben geschwenkt und mittels des Stützelements 10 (Figur 2) oder 13 (Figur 3) in dieser nach oben geschwenkten Position gehalten werden. Es ergibt sich dann eine Situation wie sie in der Figur 4 für die Variante aus der Figur 3 dargestellt ist. Eine analoge Situation würde sich für die Variante aus der Figur 2 ergeben.

Das untere Plastifizierungsteil 22a kann nun in ähnlicher Weise wie das obere Plastifizierungsteil 23a von seinem Antriebsteil 22b abgebaut und entfernt werden. Aufgrund des freien Raums vor dem oberen Antriebsteil 23b (siehe Figur 4) kann dies problemlos bewerkstelligt werden. Nun kann ein neues oder ein anderes Plastifizierungsteil an der Schnittstelle 24 mit dem Antriebsteil 22b der unteren Plastifiziereinheit 1 verbunden werden.

Nachfolgend kann das Stützelement 10 bzw. 13 wieder eingeklappt und das Antriebsteil 23b der oberen Plastifiziereinheit 2 in seine Ausgangslage zurückbewegt werden.

Anschließend kann das obere Plastifizierungsteil 23a an der Schnittstelle 25 mit dem Antriebsteil 23b der oberen Plastifiziereinheit 2 verbunden werden, so dass die obere Plastifiziereinheit 2 wieder vollständig funktionsfähig ist. Schließlich können die beiden Plastifiziereinheiten 1 und 2 zu gegebener Zeit wieder aus der Betriebsposition heraus in Verbindung mit einem Formwerkzeug gebracht werden.

### Bezugszeichenliste

- 1: Untere Plastifiziereinheit
- 2: Obere Plastifiziereinheit
- 3: Gestell
- 4: Abdeckung des Zylinders der unteren Plastifiziereinheit
- 5: Erste Antriebseinheit
- 6: Abdeckung des Zylinders der oberen Plastifiziereinheit
- 7: Zweite Antriebseinheit
- 8: Tragrahmen
- 8.1: Erster, horizontaler Schenkel des Tragrahmens 8
- 8.2: Zweiter, vertikaler Schnecke! des Tragrahmens 8
- 9: Drehachse gemäß erster Variante
- 10: Stützelement erster Art
- 11: Drehachse des Stützelements 10
- 12: Drehachse gemäß zweiter Variante
- 13: Stützelement zweiter Art
- 14: Drehachse des Stützelements 13
- 20: Vorderes Tragelement
- 21: Hinteres Tragelement
- 22a: Plastifizierungsteil der unteren Plastifiziereinheit 1
- 22b: Antriebsteil der unteren Plastifiziereinheit 1
- 23a: Plastifizierungsteil der oberen Plastifiziereinheit 2
- 23b: Antriebsteil der oberen Plastifiziereinheit 2
- 24: Schnittstelle der unteren Plastifiziereinheit 1
- 25: Schnittstelle der oberen Plastifiziereinheit 2
- 26a: Erster Linearantrieb
- 26b: Zweiter Linearantrieb
- 27: Düsenplatte
- α: Schwenkwinkel

## Patentansprüche

1. Spritzeinheit für das Mehrkomponenten-Spritzgießen mit einer Kunststoff-Spritzgießmaschine, wobei die Spritzeinheit zwei Plastifiziereinheiten (1, 2) umfasst, die relativ zueinander übereinander auf einem Gestell (3) angeordnet sind, wobei eine erste, untere Plastifiziereinheit (1) und eine darüber angeordnete zweite, obere Plastifiziereinheit (2) vorliegen, wobei jede der Plastifiziereinheiten (1, 2) zum Aufbereiten einer Schmelze sowie zum Einspritzen der Schmelze in ein Formwerkzeug über die an das Formwerkzeug angedockten oder angepressten Düsen der beiden Plastifiziereinheiten ausgebildet ist,
**dadurch gekennzeichnet, dass**
die obere Plastifizereinheit (2) gegenüber der unteren Plastifiziereinheit (1) um eine horizontale Drehachse (9, 12) zwischen mindestens zwei Positionen schwenkbar ist, nämlich einer ersten Position als Betriebsposition, in welcher die beiden Plastifiziereinheiten (1, 2) in Verbindung mit einem Formwerkzeug bringbar sind, wobei die Verbindung mit dem Formwerkzeug durch ein Verfahren der beiden Plastifiziereinheiten aus der Betriebsposition heraus auf das Formwerkzeug zu und durch das Andocken oder Anpressen der Düsen der beiden Plastifiziereinheiten an das Formwerkzeug erfolgt, und einer zweiten Position als Wartungsposition, in welcher die obere Plastifiziereinheit (2) gegenüber der Betriebsposition nach oben aus der Betriebsposition heraus geschwenkt ist.

2. Spritzeinheit nach Anspruch 1,
**dadurch gekennzeichnet, dass**
die obere Plastifiziereinheit (2) aus der Betriebsposition heraus um einen vorgebbaren Schwenkwinkel (α) gegenüber der Betriebsposition geschwenkt werden kann, wobei ein vorgebbarer Bezugspunkt auf der Längsachse der oberen Plastifizereinheit (2) einen vorgebbaren vertikalen Abstand zur Längsachse der unteren Plastifiziereinheit (1) aufweist.

3. Spritzeinheit nach einem der vorstehenden Ansprüche,
**dadurch gekennzeichnet, dass**
ein Tragrahmen (8) vorgesehen ist, der sich zumindest abschnittsweise über der unteren Plastifiziereinheit (1) erstreckt, wobei der Tragrahmen (8) von der unteren Plastifiziereinheit (1) bestandet oder lösbar mit dieser verbunden ist, und auf dem die obere Plastifiziereinheit (2) vorzugweise lösbar befestigt und abgestützt ist.

4. Spritzeinheit nach Anspruch 3,
**dadurch gekennzeichnet, dass**
der Tragrahmen (8) um eine horizontale Drehachse (9) schwenkbar mit dem Gestell (3) verbunden ist, wobei die Lage der horizontalen Drehachse (9) derart gewählt ist, dass die obere Plastifiziereinheit (2) zusammen mit dem Tragrahmen (8) zwischen der Betriebsposition und der Wartungsposition schenkbar ist.

5. Spritzeinheit nach Anspruch 3,
**dadurch gekennzeichnet, dass**
die obere Plastifiziereinheit (2) derart gelenkig mit dem Tragrahmen (8) verbunden ist, dass diese Verbindung eine horizontale Drehachse (12) bildet, um welche die obere Plastifizereinheit (2) gegenüber der unteren Plastifiziereinheit (1) zwischen der Betriebsposition und der Wartungsposition schwenkbar ist.

6. Spritzeinheit nach Anspruch 5,
**dadurch gekennzeichnet, dass**
an dem Tragrahmen (8) ein vorderes Tragelement (20) und ein hinteres Tragelement (21) vorgesehen sind, auf denen das Gewicht der oberen Plastifiziereinheit (2) abgestützt ist, wobei die obere Plastifiziereinheit (2) gelenkig mit dem hinteren Tragelement (21) verbunden und lösbar an dem vorderen Tragelement (20) befestigt ist.

7. Spritzeinheit nach einem der vorstehenden Ansprüche,
**dadurch gekennzeichnet, dass**
ein Stützelement (10, 13) vorgesehen ist, mit welchem die obere Plastifiziereinheit (2) in der Wartungsposition gehalten werden kann.

8. Spritzeinheit nach Anspruch 7,
**dadurch gekennzeichnet, dass**
das Stützelement (10, 13) um eine horizontale Stützelement-Drehachse (11, 14) drehbar ist und in mindestens zwei Stellungen gebracht werden kann, nämlich in eine eingeklappte Stellung als Ruhestellung, welche vorliegt, wenn sich die obere Plastifiziereinheit (2) in der Betriebsposition befindet, und in eine ausgeklappte Stellung als Stützstellung, welche vorliegt, wenn sich die obere Plastifiziereinheit (2) in der Wartungsposition befindet, wobei das Stützelement (10, 13) vorzugsweise in der eingeklappten und/oder vorzugsweise in der ausgeklappten Stellung verriegelbar ist.

9. Spritzeinheit nach einem der Ansprüche 7 bis 8,
**dadurch gekennzeichnet, dass**
ein Stützelement (10) an dem Tragrahmen (8) angebracht und diesem gegenüber um eine horizontale Stützelement-Drehachse (11) drehbar ist.

10. Spritzeinheit nach einem der Ansprüche 7 bis 8,
**dadurch gekennzeichnet, dass**
ein Stützelement (13) an der oberen Plastifiziereinheit (2) angebracht und dieser gegenüber um eine horizontale Stützelement-Drehachse (14) drehbar ist.

11. Spritzeinheit nach einem der Ansprüche 8 bis 10,
**dadurch gekennzeichnet, dass**
ein Stützelement (10, 13) vorgesehen ist, welches derart ausgebildet und angeordnet ist, dass in der ausgeklappten Stellung des Stützelements (10, 13) der vor der Drehachse (9, 12) für das Schwenken der oberen Plastifiziereinheit (2) befindliche Abschnitt dieser Plastifiziereinheit (2) über das Stützelement (10, 13) auf dem Gestell (3) und/oder der unteren Plastifiziereinheit (1) abgestützt ist und die obere Plastifiziereinheit (2) sicher in der Wartungsposition gehalten werden kann.

12. Spritzeinheit nach einem der vorstehenden Ansprüche,
**dadurch gekennzeichnet,**
**dass** die obere Plastifiziereinheit (2) ein Plastifizierungsteil (23a) und ein Antriebsteil (23b) umfasst, welche an einer Schnittstelle (25) lösbar miteinander verbunden sind.

13. Spritzeinheit nach einem der vorstehenden Ansprüche,
**dadurch gekennzeichnet,**
**dass** die untere Plastifiziereinheit (1) ein Plastifizierungsteil (22a) und ein Antriebsteil (22b) umfasst, welche an einer Schnittstelle (24) lösbar miteinander verbunden sind.

14. Spritzeinheit nach einem der vorstehenden Ansprüche,
**dadurch gekennzeichnet,**
**dass** ein Stützelement (13) an der oberen Plastifiziereinheit (2) angebracht und dieser gegenüber um eine horizontale Stützelement-Drehachse (14) drehbar ist, wobei die obere Plastifiziereinheit (2) ein Plastifizierungsteil (23a) und ein Antriebsteil (23b) umfasst, welche an einer Schnittstelle (25) lösbar miteinander verbunden sind, und wobei die Stützelement-Drehachse (14) an der Schnittstelle (24) vorgesehen ist oder auf der Seite der Schnittstelle (25), auf der sich das Antriebsteil (23) befindet bzw. an dem Antriebsteil (23b) selbst, insbesondere an der Unterseite des Antriebsteils (23b).

15. Spritzeinheit nach einem der vorstehenden Ansprüche,
**dadurch gekennzeichnet,**
**dass** ein Stützelement (10, 13) vorgesehen ist, welches derart ausgebildet und angeordnet ist, dass in der ausgeklappten Stellung des Stützelements (10, 13) der Antriebsteil (23b) der oberen Plastifiziereinheit (2) abgestützt ist und sicher in der Wartungsposition gehalten werden kann, insbesondere in einem Zustand, in welchem das obere Plastifizierungsteil (23a) von dem oberen Antriebsteil (23b) losgelöst bzw. entfernt ist.

## Claims

1. An injection unit for multi-component injection moulding with a plastic injection moulding machine, wherein the injection unit comprises two plasticising units (1, 2) which are arranged one above the other relative to one another on a frame (3), wherein a first, lower plasticising unit (1) and a second, upper plasticising unit (2) arranged thereabove are present, wherein each of the plasticising units (1, 2) is designed to prepare a melt and to inject the melt into a moulding tool via the nozzles of the two plasticising units which are docked or pressed onto the moulding tool,
**characterized in that**
the upper plasticising unit (2) is pivotable relative to the lower plasticising unit (1) about a horizontal axis of rotation (9, 12) between at least two positions, namely a first position as operating position, in which the two plasticising units (1, 2) are able to be brought in connection with a moulding tool, wherein the connection with the moulding tool takes place by a moving of the two plasticising units out of the operating position towards the moulding tool and by the docking or pressing of the nozzles of the two plasticising units onto the moulding tool, and a second position as maintenance position, in which the upper plasticising unit (2) is pivoted in relation to the operating position upwards out from the operating position.

2. The injection unit according to Claim 1,
**characterized in that**
the upper plasticising unit (2) can be pivoted out from the operating position about a predeterminable pivot angle (α) relative to the operating position, wherein a predeterminable reference point on the longitudinal axis of the upper plasticising unit (2) has a predeterminable vertical distance from the longitudinal axis of the lower plasticising unit (1).

3. The injection unit according to one of the preceding claims,
**characterized in that**
a supporting frame (8) is provided, which extends at least partially over the lower plasticising unit (1), wherein the supporting frame (8) is spaced apart from the lower plasticising unit (1) or is detachably connected therewith, and on which the upper plasticising unit (2) is preferably detachably fastened and supported.

4. The injection unit according to Claim 3,
**characterized in that**
the supporting frame (8) is pivotably connected to the frame (3) about a horizontal axis of rotation (9), wherein the position of the horizontal axis of rotation (9) is selected such that the upper plasticising unit (2) is pivotable together with the supporting frame (8) between the operating position and the maintenance position.

5. The injection unit according to Claim 3,
**characterized in that**
the upper plasticising unit (2) is articulatedly connected to the supporting frame (8) such that this connection forms a horizontal axis of rotation (12) about which the upper plasticising unit (2) is pivotable relative to the lower plasticising unit (1) between the operating position and the maintenance position.

6. The injection unit according to Claim 5,
**characterized in that**
on the supporting frame (8) a front supporting element (20) and a rear supporting element (21) are provided, on which the weight of the upper plasticising unit (2) is supported, wherein the upper plasticising unit (2) is articulately connected to the lower supporting element (21) and is fastened detachably on the front supporting element (20).

7. The injection unit according to one of the preceding claims,
**characterized in that**
a support element (10, 13) is provided, by which the upper plasticising unit (2) can be held in the maintenance position.

8. The injection unit according to Claim 7,
**characterized in that**
the support element (10, 13) is rotatable about a horizontal support element axis of rotation (11, 14) and can be brought into at least two positions, namely into a folded position as position of rest, which is present when the upper plasticising unit (2) is situated in the operating position, and into an unfolded position as support position, which is present when the upper plasticising unit (2) is situated in the maintenance position, wherein the support element (10, 13) is preferably able to be locked in the folded position and/or preferably in the unfolded position.

9. The injection unit according to one of Claims 7 to 8,
**characterized in that**
a support element (10) is mounted on the supporting frame (8) and is rotatable relative thereto about a horizontal support element axis of rotation (11).

10. The injection unit according to one of Claims 7 to 8,
**characterized in that**
a support element (13) is mounted on the upper plasticising unit (2) and is rotatable relative thereto about a horizontal support element axis of rotation (14).

11. The injection unit according to one of Claims 8 to 10,
**characterized in that**
a support element (10, 13) is provided, which is configured and arranged such that in the unfolded position of the support element (10, 13), the portion of the plasticising unit (2) situated before the axis of rotation (9, 12) for the pivoting of this upper plasticising unit (2) is supported via the support element (10, 13) on the frame (3) and/or on the lower plasticising unit (1), and the upper plasticising unit (2) can be held securely in the maintenance position.

12. The injection unit according to one of the preceding claims,
**characterized in that**
the upper plasticising unit (2) comprises a plasticising part (23a) and a drive part (23b), which are detachably connected to one another at an interface (25).

13. The injection unit according to one of the preceding claims,
**characterized in that**
the lower plasticising unit (1) comprises a plasticising part (22a) and a drive part (22b), which are detachably connected to one another at an interface (24).

14. The injection unit according to one of the preceding claims,
**characterized in that**
a support element (13) is mounted on the upper plasticising unit (2) and is rotatable relative thereto about a horizontal support element rotation axis (14), wherein the upper plasticising unit (2) comprises a plasticising part (23a) and a drive part (23b), which are detachably connected to one another at an interface (25), and wherein the support element axis of rotation (14) is provided at the interface (24) or is situated on the side of the interface (25) on which the drive part (23) is situated or respectively on the drive part (23b) itself, in particular on the underside of the drive part (23b).

15. The injection unit according to one of the preceding claims,
**characterized in that**
a support element (10, 13) is provided, which is configured and arranged such that in the unfolded position of the support element (10, 13) the drive part (23b) of the upper plasticising unit (2) is supported and can be held securely in the maintenance position, in particular in a state in which the upper plasticising part (23a) is released or respectively distanced from the upper drive part (23b).

## Revendications

1. Unité de plastification utilisée pour le moulage par injection multi-composants avec une machine de moulage par injection de plastique, dans laquelle l'unité de plastification comprend deux unités de plastification (1, 2) qui sont disposées l'une au-dessus de l'autre sur un bâti (3), dans lequel une première unité de plastification basse (1) et une deuxième unité de plastification haute (2) disposée dessus sont présentes, dans laquelle chacune des unités de plastification (1, 2) est formée pour préparer une masse fondue ainsi que pour pulvériser la masse fondue dans un outil de moulage par les filières des deux unités de plastification, attelées ou pressées contre l'outil de moulage,
**caractérisée en ce que**
l'unité de plastification haute (2) peut basculer par rapport à l'unité de plastification basse (1) entre au moins deux positions sur un pivot (9, 12), à savoir une première position en tant que position de fonctionnement dans laquelle les deux unités de plastification (1, 2) peuvent être amenées en liaison avec un outil de moulage, dans laquelle la liaison avec l'outil de moulage s'effectue par un déplacement des deux unités de plastification hors de la position de fonctionnement pour aller sur l'outil de moulage et par l'attelage ou le pressage des filières des deux unités de plastification contre l'outil de moulage, et une deuxième position en tant que position de maintenance, dans laquelle l'unité de plastification haute (2) est basculée vers le haut hors de la position de fonctionnement par rapport à la position de fonctionnement.

2. Unité de plastification selon la revendication 1,
**caractérisée en ce que**
l'unité de plastification haute (2) peut être basculée hors de la position de fonctionnement par rapport à la position de fonctionnement dans un angle de bascule (α) pouvant être prédéfini, dans laquelle un point de référence pouvant être prédéfini sur l'axe longitudinal de l'unité de plastification haute (2) présente un écart vertical pouvant être prédéfini par rapport à l'axe longitudinal de l'unité de plastification basse (1).

3. Unité de plastification selon l'une des revendications précédentes,
**caractérisé en ce que**
un cadre-porteur (8) est prévu qui s'étend au moins par tronçons sur l'unité de plastification basse (1), dans laquelle le cadre-porteur (8) est distant de l'unité de plastification basse (1) ou relié de manière séparable à celle-ci et sur lequel l'unité de plastification haute (2) est de préférence fixée et appuyée de manière séparable.

4. Unité de plastification selon la revendication 3,
**caractérisée en ce que**
le cadre-porteur (8) est relié au bâti (3) en pouvant basculer sur un pivot horizontal (9), dans laquelle la position du pivot horizontal (9) est ainsi choisie que l'unité de plastification haute (2) peut basculer conjointement avec le cadre-porteur (8) entre la position de fonctionnement et la position de maintenance.

5. Unité de plastification selon la revendication 3,
**caractérisée en ce que**
l'unité de plastification haute (2) est ainsi reliée de manière articulée au cadre-porteur (8) que cette liaison forme un pivot horizontal (12) autour duquel l'unité de plastification haute (2) peut basculer entre la position de fonctionnement et la position de maintenance par rapport à l'unité de plastification basse (1).

6. Unité de plastification selon la revendication 5,
**caractérisée en ce que**
un élément porteur avant (20) et un élément porteur arrière (21) sont prévus sur le cadre-porteur (8), sur lesquels le poids de l'unité de plastification haute (2) est appuyé, dans laquelle l'unité de plastification haute (2) est reliée de manière articulée à l'élément porteur arrière (21) et est fixée de manière séparable à l'élément porteur avant (20).

7. Unité de plastification selon l'une des revendications précédentes,
**caractérisé en ce que**
un élément d'appui (10, 13) est prévu, avec lequel l'unité de plastification haute (2) peut être maintenue dans la position de maintenance.

8. Unité de plastification selon la revendication 7,
**caractérisée en ce que**
l'élément d'appui (10, 13) est rotatif sur un pivot d'élément d'appui horizontal (11, 14) et peut être amené dans au moins deux positions, à savoir dans une position rabattue en tant que position de repos qui est présente lorsque l'unité de plastification haute (2) se trouve dans la position de fonctionnement, et une position déployée en tant que position d'appui qui est présente lorsque l'unité de plastification haute (2) se trouve dans la position de maintenance, dans laquelle l'élément d'appui (10, 13) peut être verrouillé de préférence dans la position rabattue et/ou de préférence déployée.

9. Unité de plastification selon l'une des revendications 7 à 8,
**caractérisé en ce que**
un élément d'appui (10) est placé contre le cadre-porteur (8) et est rotatif par rapport à celui-ci sur un pivot d'élément d'appui horizontal (11).

10. Unité de plastification selon l'une des revendications 7 à 8,
**caractérisé en ce que**
un élément d'appui (13) est placé sur l'unité de plastification haute (2) et est rotatif par rapport à celui-ci sur un pivot d'élément d'appui horizontal (14) .

11. Unité de plastification selon l'une des revendications 8 à 10,
**caractérisé en ce que**
un élément d'appui (10, 13) est prévu, lequel est ainsi formé et disposé que dans la position déployée de l'élément d'appui (10, 13), le tronçon de l'unité de plastification haute (2) se trouvant devant le pivot (9, 12) pour la bascule de l'unité de plastification haute (2) est appuyé par l'élément d'appui (10, 13) sur le bâti (3) et/ou l'unité de plastification basse (1) et l'unité de plastification haute (2) peut être maintenue dans la position de maintenance de manière sécurisée.

12. Unité de plastification selon l'une des revendications précédentes,
**caractérisé en ce que**
l'unité de plastification haute (2) comprend une partie de plastification (23a) et une partie d'entraînement (23b), lesquelles sont reliées à une interface (25) en étant séparables entre elles.

13. Unité de plastification selon l'une des revendications précédentes,
**caractérisé en ce que**
l'unité de plastification basse (1) comprend une partie de plastification (22a) et une partie d'entraînement (22b), lesquelles sont reliées à une interface (24) en étant séparables entre elles.

14. Unité de plastification selon l'une des revendications précédentes,
**caractérisé en ce que**
un élément d'appui (13) est disposé contre l'unité de plastification haute (2) et rotatif par rapport à celle-ci sur un pivot d'élément d'appui horizontal (14), dans laquelle l'unité de plastification haute (2) comprend une partie de plastification (23a) et une partie d'entraînement (23b), lesquelles sont reliées à une interface (25) en étant séparables entre elles, et dans lequel le pivot d'élément d'appui (14) est prévu sur l'interface (24) ou sur le côté de l'interface (25) sur lequel se trouve la partie d'entraînement (23), respectivement contre la partie d'entraînement (23b) elle-même, en particulier sur la sous-face de la partie d'entraînement (23b).

15. Unité de plastification selon l'une des revendications précédentes,
**caractérisé en ce que**
un élément d'appui (10, 13) est prévu, lequel est ainsi formé et disposé que dans la position déployée de l'élément d'appui (10, 13), la partie d'entraînement (23b) de l'unité de plastification haute (2) est appuyée et peut être maintenue dans la position de maintenance de manière sécurisée, en particulier dans un état dans lequel la partie de plastification supérieure (23a) est séparée, respectivement éloignée de la partie d'entraînement (23b) supérieure.
